(19) Europäisches Patentamt
European Patent Office
Office européen des brevets

(11) **EP 2 360 637 B1**

(12) **EUROPEAN PATENT SPECIFICATION**

(45) Date of publication and mention
of the grant of the patent:
**19.12.2012 Bulletin 2012/51**

(51) Int Cl.:
***G06T 3/40*** (2006.01)

(21) Application number: **10189554.8**

(22) Date of filing: **01.11.2010**

(54) **Motion compensated interpolation**

Bewegungskompensierte Interpolation

Interpolation compensée par mouvement

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.11.2009 TR 200908303**

(43) Date of publication of application:
**24.08.2011 Bulletin 2011/34**

(73) Proprietor: **Vestel Elektronik Sanayi ve Ticaret A.S.**
**45030 Manisa (TR)**

(72) Inventor: **Ozkalayci, Burak**
**45030 Manisa (TR)**

(74) Representative: **Cayli, Hülya**
**Paragon Consultancy Inc.**
**Koza Sokak No: 63/2**
**GOP**
**06540 Ankara (TR)**

(56) References cited:
**EP-A1- 1 855 474     EP-A1- 1 912 172**

- **LEE S-H ET AL: "WEIGHTED-ADAPTIVE MOTION-COMPENSATED FRAME RATE UP-CONVERSION", IEEE TRANSACTIONS ON CONSUMER ELECTRONICS, IEEE SERVICE CENTER, NEW YORK, NY, US, vol. 49, no. 3, 1 August 2003 (2003-08-01) , pages 485-492, XP001172087, ISSN: 0098-3063, DOI: DOI: 10.1109/TCE.2003.1233759**
- **ROBERT P ET AL: "ADVANCED HIGH-DEFINITION 50 TO 60-HZ STANDARDS CONVERSION", SMPTE - MOTION IMAGING JOURNAL, SOCIETY OF MOTION PICTURE AND TELEVISION ENGINEERS, WHITE PLAINS, NY, US, vol. 98, no. 6, 1 June 1989 (1989-06-01), pages 420-424, XP000034561, ISSN: 0036-1682**
- **KAWAGUCHI K ET AL: "Frame rate up-conversion considering multiple motion", IMAGE PROCESSING, 1997. PROCEEDINGS., INTERNATIONAL CONFERENCE ON SANTA BARBARA, CA, USA 26-29 OCT. 1997, LOS ALAMITOS, CA, USA,IEEE COMPUT. SOC, US, vol. 1, 26 October 1997 (1997-10-26), pages 727-730, XP010254274, DOI: DOI:10.1109/ICIP. 1997.648029 ISBN: 978-0-8186-8183-7**

## Description

### Technical field

The present invention relates to a motion compensated interpolation technique for frame rate up-conversion applications.

### Prior art

Motion compensated interpolation is widely utilized in video processing applications like video coding and frame rate up-conversion. By the motion vector field acquired via a motion estimation algorithm, a streaming frame is reconstructed in video coding applications or an intermediate frame is predicted in frame rate up-conversion applications. In coding applications the residual between the original and the motion compensated frame is also coded in order to reach a desired level of quality and reduce artifacts. However in frame rate up-conversion algorithms after the motion compensation step, some spatiotemporal post-processing methods are utilized to suppress the artifacts, since the ground truth is not known.

Since the majority of the motion estimation algorithms in practice are block based approaches, the motion compensated interpolation approaches suffer from blocky crisp transitions. In order to smooth out these transitions, Overlapped-Block Motion Compensation (OBMC) (An overlapped block motion compensation for high quality motion picture coding - Circuits and Systems, 1992. ISCAS '92. Proceedings - Nogaki, S. Ohta, M.) and Weighted Averaging Motion Compensated Interpolation (WAMCI) (Weighted-adaptive motion-compensated frame rate up-conversion - Consumer Electronics, IEEE Transactions on Volume 49, Issue 3, Aug. 2003 Page(s): 485 - 492 - Sung-Hee Lee; Ohjae Kwon; Rae-Hong Park) algorithms are proposed in the literature.

Patent document no EP1855474A1 discloses a method for generating an interpolated image between two images of an input image sequence. Said method comprises the steps of determining fidelity information for at least one motion vector which is descriptive for motion between said previous and subsequent image, wherein said fidelity information is descriptive for the level and accuracy of said motion; determining classification information for said at least one motion vector, wherein said classification information depends on said fidelity information, said classification information being descriptive for the motion type of said motion; and selecting an interpolation method as dependent on the determined classification information,

Although there are many various and sophisticated motion estimation methods in the literature, all of them are prone to estimate erroneous motion vectors due to intensity ambiguities and occlusion phenomenon

### Objective of the invention

The aim of the present invention is to provide a simple, efficient and implicitly halo reducing motion compensated interpolation method, as defined in the appended claims.

Another aim of the invention is to provide an artifact free, natural motion compensated interpolation for frame rate up-conversion applications.

### Brief description of the drawings

Figure 1 shows the outline of the proposed motion-compensated interpolation for frame rate up-conversion.
Figure 2 shows an example of a weight kernel for fixed values of choice.
Figure 3 shows an exemplary choice of weight kernel, given for fall back interpolation.
Figure 4 demonstrates the locations of the compared vectors.

### Detailed description of the invention

Motion-compensated image interpolation method is utilized in frame rate conversion applications. For frame rate conversion applications the accuracy of the motion vector estimation plays an important role for synthesizing a natural, artifact free interpolated frames. The performance of the motion compensated interpolation degrades due to block-wise motion estimation/compensation approaches and motion vector estimation errors especially around the moving object boundaries (motion boundaries) according to the occlusion phenomena.

The straightforward motion-compensated interpolation method makes a bidirectional interpolation like

$$I(x, t + 0.5) = 0.5 * (I(x - d/2, t) + I(x + d/2, t+1)) \qquad (1)$$

Wherein I is intensity of the block, x is location of the block and t is the time (i.e. t denotes the first frame, t+1 denotes the next frame and t+0.5 denotes the interpolated frame).

Without checking the reliability and orientation of the motion vector, d, the resulting interpolation may suffer by the crisp transitions at the block boundaries due to motion vector differences and/or may suffer by the halo artifact due to averaging foreground and background object intensities at the object boundaries (motion boundaries) by the bi-directional interpolation.

The proposed method has two main features. First one is to make a weighted compensation on neighbouring blocks, which decreases blocky transitions. And the second one is to check the motion vector reliability and according to its support direction selecting a compensation method among bi-directional, uni-directional and null vector compensation methods, which decreases the occlusion artifacts.

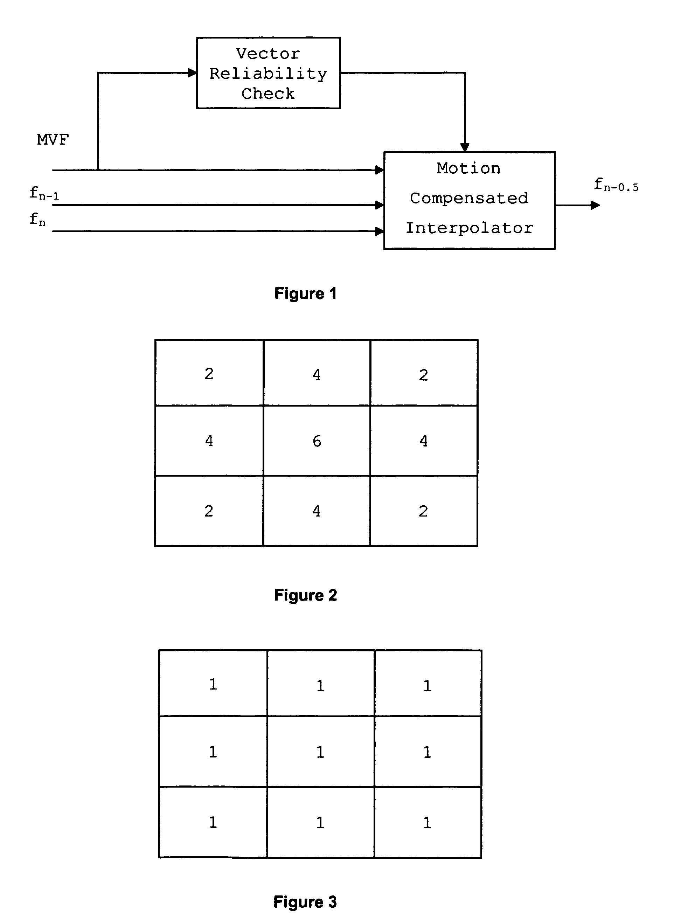

Figure 1 shows the outline of the proposed motion-compensated interpolation for frame rate up-conversion. The Motion Vector Field (MVF) is assumed to be obtained by some motion estimation algorithms in advance. Any "true motion estimation" algorithm suitable for frame rate up-conversion applications will provide a spatiotemporally smooth MVF. The motion vector reliability check and motion compensated interpolation steps are done block by block in raster scan order or in any other scan order.

The motion vector reliability check is done by comparing the current motion vector (MV) with the other MVs in the orientation of the current MV. Since the true motion vectors are expected to have a high spatial correlation, it is expected to find similar MVs along the direction of the motion. Hence except the object/motion boundaries, the MVs in the forward and in the backward direction of the current MV should be similar to current vector. For the object boundaries (motion boundaries) the similar MV should exist in only one of the directions, i.e. forward or backward direction. If both of the MV at the forward and backward direction of the current MV differs considerably from the current MV than the current MV might not be a reliable MV estimate. According to these facts the motion vector reliability check is done by two metric:

$$r_b = \left| d(x) - d(x + \lambda d(x)) \right|$$

and

$$r_f = \left| d(x) - d(x - \lambda d(x)) \right|,$$

wherein d(x) represents the motion vector at location x.

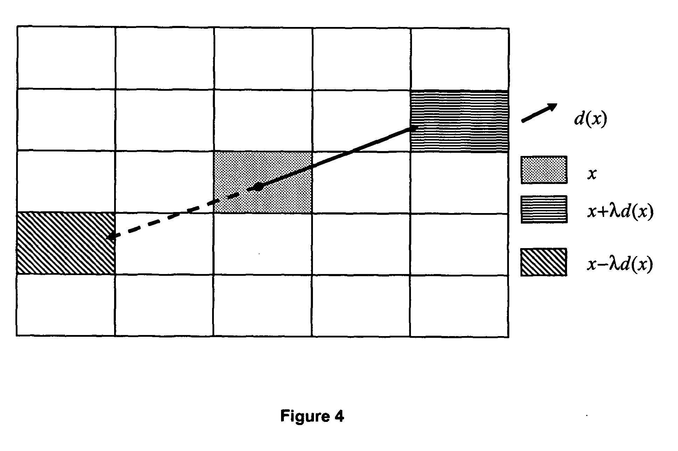

The locations of the compared vectors are demonstrated in Figure 4. $r_f$ and $r_b$ metrics are compared with a threshold, $T_r$, and according to this comparison results, a suitable interpolation method is fed to the motion compensated interpolation unit. The λ variable may take values between 0.5 and 1.0. The suitable interpolation method is selected from Table 1.

**Table 1**

|  | $r_f < T_r$ | $r_f >= T_r$ |
|---|---|---|
| $r_b < T_r$ | Bi-directional | Backward uni-directional |
| $r_b >= T_r$ | Forward uni-directional | Fall back interpolation |

The bi-directional interpolation is done according to equation 1. Backward uni-directional interpolation is done according to

$$I(x, t + 0.5) = I(x + d/2, t+1) \qquad (2)$$

and forward uni-directional interpolation is done according to

$$I(x, t+0.5) = I(x - d/2, t) \qquad (3)$$

The fall back interpolation method is the interpolation method when the estimated MV is not a reliable one. Most of the fall back strategies in the literature is to use null vector in the interpolation. Hence the fall back interpolation is done by the null vector which is

$$I(x, t+0.5) = 0.5 * (I(x, t) + I(x, t+1)) \qquad (4)$$

The motion compensated interpolation unit uses each vector to compensate the current block and its 8-neighbor blocks with different weights. The intensity and weight contributions to each pixel are accumulated in buffers. The resultant interpolated frame is obtained by normalizing the accumulated intensity buffer with the accumulated weight buffer after processing every block.

Each pixel value within a block to be synthesized is determined by the 3x3 neighboring vectors around that block. Supposing each vector brings an intensity value of $I_1$, $I_2$, ..., $I_9$ in sequence for each pixel; and the calculated weight coefficients of these vectors for that pixel is $w_1$, $w_2$, ... $w_9$ in sequence. Then the resultant interpolated buffer will be the accumulation of these values such that:

$$I_{buf} = I_1 * w_1 + I_2 * w_2 + \dots + I_9 * w_9$$

While the intensity range is 0-255 and the accumulated value will be within a much more higher range; the accumulated value should be normalized. This normalization is done as follows:

$$I_{normalized} = ( I_1 * w_1 + I_2 * w_2 + \dots + I_9 * w_9 ) / ( w_1 + w_2 + \dots + w_9 )$$

The denominator of this equation is accumulated in a weight buffer; the numerator is accumulated in an intensity buffer. The result of the last synthesis is obtained by the above normalization.

The contribution weights of the current block and 8-neighbors may be set to fix values or may be a function of the matching metric and/or reliability metric of the current vector for the block in consideration. An example of a weight kernel is given in Figure 2 for fixed values of choice. In this example, fixed values are given to the blocks according to their location, within a 3x3 neighborhood such that diagonal edges are given a value of 2; right, left, top and bottom neighbors are given a value of 4, and the center is given a value of 6. However, these weight coefficients can be a function of any other variable, such as a function of the matching metric of the vector used, as in WAMCI method. This weight kernel might be used when the MV to be used in the interpolation is a reliable one which means bi-directional or forward/backward uni-directional interpolation is to be used. When the null MV interpolation is to be used in the fall back interpolation case, the weight kernel coefficients should be greater than zero and should be as small as possible. In Figure 3 an exemplary choice of weight kernel is given for fall back interpolation, in which example all of these weights are set to 1.

By this strategy the fall back interpolation mechanism is restricted as much as possible, while providing a smooth transition between the fall back and motion compensation interpolations. And also for the sparsely distributed unreliable MV estimates, the contributions of the neighbor reliable vectors will dominate the interpolation of the block in consideration.

Since the weight kernels are all greater than zero for all possible cases, the intensity and weight accumulation buffers will be always greater than zero, which means all the pixels of the intermediate frame is interpolated. By normalizing the intensity accumulation buffer with the weight accumulation buffer the motion compensated interpolated frame is obtained.

The explained motion compensated interpolation scheme can also be utilized to find the cover and uncover regions around the object boundaries (motion boundaries). Another accumulation buffer for occlusion is kept and for each forward uni-directional interpolation negated weight coefficient is contributed and for each backward uni-directional interpolation weight coefficient is contributed. For other types of interpolation no contribution is added to occlusion buffer. At the normalizing step the occlusion buffer is also normalized with the weight buffer. The resultant smooth map between -1 and 1 will be a cover/uncover map. Minus side means cover regions and positive side means uncover regions. This kind of occlusion detection is also more robust to MVF estimate errors since 3x3 block neighborhood contributes to cover/uncover detection.

The explained motion compensated interpolation algorithm is detailed for a 2-frame based and bi-direction MVF based motion estimation/compensation schemes. The variants of the algorithms for 3-frame based and/or forward and/or backward MVF based motion estimation/compensation schemes can be derived similarly.

An embodiment of the proposed invention is described step by step:

Step 1: Set the intensity, weight and occlusion accumulation buffers to zero for all pixels. $I_{buf} = 0$, $W_{buf} = 0$, and $O_{buf} = 0$. In any scan order (raster scan) visit every block and do the steps from 2 to 5.

Step 2: Compute the $r_b$ and $r_f$ metrics for the MV reliability checking.

$$r_b = \left| d(x) - d(x + \lambda d(x)) \right|$$

and

$$r_f = \left| d(x) - d(x - \lambda d(x)) \right|$$

where $d(x)$ is the MV of the block at x.

Step 3: Determine the interpolation type and its weight kernel for the 3x3 block neighborhood according to the Table 1.

Step 4: For each block in the 3x3 block neighborhood, compute the interpolation $I(x, t+0.5)$ of each pixel according to determined interpolation type (among equations 1, 2, 3, and 4).

Step 5: Accumulate the weighted interpolation intensity and the corresponding weight kernel coefficient to buffers.

$$I_{buf} = I_{buf} + wI(x, t+0.5)$$

$$W_{buf} = W_{buf} + w$$

$$O_{buf} = O_{buf} \pm w$$

for uni-directional interpolation cases
Where w is the weight coefficient of the corresponding block in the 3x3 neighborhood.

Step 6: After visiting all the blocks in the frame, normalize the intensity and occlusion buffers with the weight buffer for each pixel.

$I_{final}(x, t+0.5) = I_{buf}(x)/W_{buf}(x)$ gives the intensity value of the interpolated frame.
$O_{final}(x, t+0.5) = O_{buf}(x)/W_{buf}(x)$ gives the occlusion map.

**Claims**

1. A motion compensated frame interpolation method comprising the steps of obtaining a motion vector field by applying a block-wise motion estimation algorithm; checking the motion vector reliability; selecting an interpolation method among bi-directional, uni-directional and null vector interpolation methods, for each spatial position in the frame to be interpolated, in accordance with the vector reliability check and making a weighted compensated interpolation on neighboring blocks to find intensity values of block in the frame to be interpolated in accordance with the intensity and weighting values of the neighboring blocks by applying the selected interpolation method, **characterized in that** the vector reliability check is made by calculating and comparing motion vectors of the blocks in the direction of the motion.

2.  A method according to claim 1 **characterized in that**, the motion vector reliability check and motion compensated interpolation steps are done block by block in a scan order.

3.  A method according to claim 1 **characterized in that**, the motion vector reliability check and motion compensated interpolation steps are done block by block in raster scan order

4.  A method according to claim 1 **characterized in that**, the vector reliability check is made by calculating two metrics:

$$r_b = \left| d(x) - d(x + \lambda d(x)) \right|$$

and

$$r_f = \left| d(x) - d(x - \lambda d(x)) \right|,$$

wherein d(x) represents the motion vector at location x, and A represents a variable.

5.  A method according to claim 4, wherein the $\lambda$ variable may take values between 0.5 and 1.0.

6.  A method according to claim 4 **characterized in that**, the $r_f$ and $r_b$ metrics are compared with a threshold value $T_r$, and according to this comparison result, a suitable interpolation method is selected and this selection is fed to the motion compensated interpolation unit.

7.  A method according to claim 6 **characterized in that**, the suitable interpolation method is selected such that;

    • If $r_b < T_r$ and $r_f < T_t$, bi-directional
    • If $r_b < T_r$ and $r_f >= T_r$ backward uni-directional
    • If $r_b >= T_r$ and $r_f < T_r$ forward uni-directional
    • If $r_b >= T_r$ and $r_f >= T_r$ null vector interpolation

8.  A method according to claim 1 **characterized in that**, after selecting an interpolation method, the weighted compensated interpolation step applies the following sub-steps :

    - determining a weight kernel for each block of a 3x3 block neighborhood, according to the selected interpolation method,
    - for each block, computing the interpolation of each pixel I(x,t+0.5) according to the determined interpolation type,
    - accumulating the weighted interpolation intensity in an intensity buffer such that :

$$I_{buf} = I_{buf} + wI(x, t + 0.5),$$

    - accumulating the corresponding weight kernel coefficient in a weight buffer such that: $W_{buf} = W_{buf} + w$,
    - after visiting all the blocks in the frame, normalizing the intensity buffer with the weight buffer for each pixel, for obtaining the motion compensated interpolated frame.

9.  A method according to claim 7 and 8 **characterized in that**, the method further comprises the steps of;

    • accumulating weight coefficients in an occlusion buffer such that:

        - a negated weight coefficient is added for each forward uni-directional interpolation;
        - a weight coefficient is added for each backward uni-directional interpolation;
        - and no coefficient is added for other types of interpolation;

    • normalizing the occlusion buffer with the weight buffer such that the resultant smooth map having valves between -1 and 1 will be a cover/uncover map; minus side means cover regions and positive side means uncover regions.

**10.** A method according to claim 1 **characterized in that**, the contribution weights of the current block and its 8-neighbours is a fixed valued and/or function of the matching metric and/or reliability metric of the current vector for the block in consideration.

**11.** A method according to claim 1 **characterized in that** it further contains the steps of :

• set an intensity, a weight and an occlusion accumulation buffer to zero for all pixels $I_{buf} = 0$, $W_{buf} = 0$, and $O_{buf} = 0$;
• in any scan order visit every block and compute the $r_b$ and $r_f$ metrics for the motion vector reliability checking such that:

$$r_b = \left| d(x) - d(x + \lambda d(x)) \right|$$

and

$$r_f = \left| d(x) - d(x - \lambda d(x)) \right|$$

where $d(x)$ is the motion vector of the block at x;
• determine the interpolation type and its weight kernel for a 3x3 block neighborhood;
• for each block in the 3x3 block neighborhood, compute the interpolation of each pixel $I(x,t+0.5)$ according to determined interpolation type ;
• accumulate the weighted interpolation intensity and the corresponding weight kernel coefficient to buffers:

$$I_{buf} = I_{buf} + wI(x,t+0.5)$$

$$W_{buf} = W_{buf} + w$$

$$O_{buf} = O_{buf} \pm w$$

for uni-directional interpolation cases
where w is the weight coefficient of the corresponding block in the 3x3 neighborhood
• after visiting all the blocks in the frame, normalize the intensity and occlusion buffers with the weight buffer for each pixel, :

$I_{final}(x, t + 0.5) = I_{buf}(x)/W_{buf}(x)$ gives the intensity value of the interpolated frame.
$O_{final}(x, t + 0. 5) = O_{buf}(x) / W_{buf}(x)$ gives the occlusion map.

**Patentansprüche**

**1.** Verfahren zur bewegungskompensierten Rahmeninterpolation umfassend die Schritte Erhalten eines Bewegungsvektorfeldes durch Anwenden eines blockweisen Bewegungsschätzungsalgorithmus, Überprüfen der Bewegungsverktorverlässlichkeit, Auswählen eines Interpolationsverfahrens aus Bidirektionalen-, Unidirektionalen- und Nullverktorinterpolationsverfahren für jede zu interpolierende Raumposition in dem Rahmen, in Übereinstimmung mit der Verktorverlässlichkeitsüberprüfung, und Durchführen einer gewichteten kompensierten Interpolation von benachbarten Blöcken, um Intensitätswerte jedes Blocks in dem zu interpolierenden Rahmen zu finden, in Übereinstimmung mit den Intensitäts- und Gewichtungswerten der benachbarten Blöcke durch Anwenden des ausgewählten Interpolationsverfahrens, **dadurch gekennzeichnet, dass** die Vektorverlässlichkeitsüberprüfung durch Berechnen und Vergleichen von Bewegungsvektoren der Blöcke in der Richtung der Bewegung durchgeführt wird.

**2.** Verfahren nach Anspruch 1, **dadurch gekennzeichnet, dass** die Vektorverlässlichkeitsüberprüfung und bewegungskompensierte Interpolationsschritte Block für Block in einer Zeilenordnung (scan order) durchgeführt werden.

**3.** Verfahren nach Anspruch 1, **dadurch gekennzeichnet, dass** die Bewegungsvektorverlässlichkeitsprüfung und bewegungskompensierte Interpolationsschritte Block für Block in einer Rasterzeilenordnung durchgeführt werden.

**4.** Verfahren nach Anspruch 1, **dadurch gekennzeichnet, dass** die Vektorverlässlichkeitsüberprüfung durch Berechnung zweier Kennzahlen durchgeführt wird:

$$r_b = \left| d(x) - d(x + \lambda d(x)) \right|$$

und

$$r_f = \left| d(x) - d(x - \lambda d(x)) \right|,$$

wobei die $d(x)$ den Bewegungsvektor am Ort $x$ und $\lambda$ eine Variable darstellt.

**5.** Verfahren nach Anspruch 4, wobei die $\lambda$-Variable Werte zwischen 0,5 und 1,0 einnehmen kann.

**6.** Verfahren nach Anspruch 4, **dadurch gekennzeichnet, dass** die $r_f$- und $r_b$-Kennwerte mit einem Durchschnittswert $T_r$ verglichen werden, und dass gemäß dem Ergebnis dieses Vergleiches ein geeignetes Interpolationsverfahren ausgewählt wird, und diese Auswahl an die bewegungskompensierte Interpolationseinheit gegeben wird.

**7.** Verfahren nach Anspruch 6, **dadurch gekennzeichnet, dass** das geeignete Interpolationsverfahren ausgewählt wird, sodass:

- falls $r_b < T_r$ und $r_f < T_r$ bidirektional
- falls $r_b < T_r$ und $r_f >= T_r$ rückwärts-unidirektional
- falls $r_b >= T_r$ und $r_f < T_r$ vorwärts-unidirektional
- falls $r_b >= T_r$ und $r_f >= T_r$ Nullvektorinterpolation.

**8.** Verfahren nach Anspruch 1, **dadurch gekennzeichnet, dass** nach Auswählen eines Interpolationsverfahrens der Schritt der gewichteten kompensierten Interpolation die folgenden Unterschritte anwendet:

- Bestimmen eines Gewichtskernels für jeden Block einer 3x3-Block-Nachbarschaft, entsprechend dem ausgewählten Interpolationsverfahren,
- für jeden Block Berechnen der Interpolation jedes Pixels $I(x,t + 0,5)$ entsprechend der festgelegten Interpolationsart,
- Sammeln der gewichteten Interpolationsintensität in einem Intensitätspuffer, sodass

$$I_{buf} = I_{buf} + wI(x,t + 0,5),$$

- Sammeln der entsprechenden Gewichtskernelkoeffizienten in einem Gewichtspuffer, sodass

$$W_{buf} = W_{buf} + w,$$

- nach Abarbeiten sämtlicher Blöcke in dem Rahmen Normalisieren des Intensitätspuffers mit dem Gewichtspuffer für jedes Pixel, um den bewegungskompensierten interpolierten Rahmen zu erhalten.

**9.** Verfahren nach Anspruch 7 und 8, **dadurch gekennzeichnet, dass** das Verfahren des Weiteren die folgenden Schritte umfasst:

- Sammeln von Gewichtskoeffizienten in einem Okklusionspuffer, sodass

- ein negierter Gewichtskoeffizient für jede vorwärt-unidirektionale Interpolation zugefügt wird,
- ein Gewichtskoeffizient für jede rückwärts-unidirektionale Interpolation zugefügt wird, und

- kein Koeffizient für andere Arten einer Interpolation zugefügt wird,

- Normalisieren des Okklusionspuffers mit dem Gewichtspuffer, sodass die sich ergebende geglättete Abbildung mit Werten zwischen -1 und 1 eine abgedeckte/unabgedeckte Abbildung sein wird, wobei eine negative Seite abgedeckte Bereiche und eine positive Seite unabgedeckte Bereiche bedeutet.

10. Verfahren nach Anspruch 1, **dadurch gekennzeichnet, dass** die Verteilungsgewichtung des aktuellen Blocks und seiner acht Nachbarn ein fester Wert und/oder eine Funktion der passenden Kennzahlen und/oder eine Verlässlichkeitskennzahl des aktuellen Vektors für den betrachteten Block ist.

11. Verfahren nach Anspruch 1, **dadurch gekennzeichnet, dass** es des Weiteren die folgenden Schritte enthält:

- Setzen eines Intensitäts-, eines Gewichts- und eines Okklusionssammelpuffers auf Null für sämtliche Pixel $I_{buf} = 0$, $W_{buf} = 0$ and $O_{buf} = 0$
- in beliebiger Scanorder Abarbeiten jedes Blocks und Berechnen der $r_b$ and $r_f$ Kennzahlen für die Überprüfung der Bewegungsvektorverlässlichkeit, sodass:

$$r_b = \left| d(x) - d(x + \lambda d(x)) \right|$$

und

$$r_f = \left| d(x) - d(x - \lambda d(x)) \right| ,$$

wobei d(x) der Bewegungsvektor des Blocks bei x ist,
- Bestimmen der Interpolationsart und ihres Gewichtskernels für eine 3x3-Block-Nachbarschaft,
- Berechnen der Interpolation jedes Pixels I(x,t+0,5) gemäß der bestimmten Interpolationsart für jeden Block der 3x3-Block-Nachbarschaft,
- Sammeln der gewichteten Interpolationsintensität und des entsprechenden Gewichtskernelkoeffizienten in Puffern:

$$I_{buf} = I_{buf} + wI(x,t + 0,5)$$

$$W_{buf} = W_{buf} + w$$

$$O_{buf} = O_{buf} \pm w$$

für unidirektionale Interpolationsfälle, wobei w der Gewichtskoeffizient des entsprechenden Blocks der 3x3-Nachbarschaft ist,
- nach Abarbeiten sämtlicher Blocks des Rahmens Normalisieren der Intensitäts- und Okklusionspuffer mit dem gewichteten Puffer für jedes Pixel, wobei
$I_{final}(x,t + 0,5) = I_{buf}(x)/W_{buf}(x)$ den Intensitätswert des interpolierten Rahmens angibt und
$O_{final}(x,t + 0,5) = O_{buf}(x)/W_{buf}(x)$ die Okklusionsabbildung angibt.

**Revendications**

1. Procédé d'interpolation d'image compensée par mouvement comprenant les étapes d'obtention d'un champ de vecteur de mouvement en appliquant un algorithme d'estimation de mouvement par blocs ; de contrôle de la fiabilité de vecteur de mouvement ; de sélection d'une méthode d'interpolation parmi des méthodes d'interpolation de vecteur nul, unidirectionnelle et bidirectionnelle, pour chaque position spatiale dans l'image à interpoler, en fonction du contrôle de fiabilité de vecteur et d'exécution d'une interpolation compensée pondérée sur des blocs voisins pour trouver des valeurs d'intensité de chaque bloc dans l'image à interpoler en fonction des valeurs d'intensité et de pondération des blocs voisins en appliquant la méthode d'interpolation sélectionnée, **caractérisé en ce que** le contrôle de fiabilité de vecteur est exécuté en calculant et en comparant des vecteurs de mouvement des blocs dans la direction de mouvement.

2. Procédé selon la revendication 1, **caractérisé en ce que** les étapes de contrôle de fiabilité de vecteur de mouvement et d'interpolation compensée par mouvement sont exécutées bloc par bloc dans un ordre de balayage.

3. Procédé selon la revendication 1, **caractérisé en ce que** les étapes de contrôle de fiabilité de vecteur de mouvement et d'interpolation compensée par mouvement sont exécutées bloc par bloc dans un ordre de balayage de trame.

4. Procédé selon la revendication 1, **caractérisé en ce que** le contrôle de fiabilité de vecteur est effectué en calculant deux métriques :

$$r_b = \left| d(x)\text{-}d(x+\lambda d(x)) \right|$$

et

$$r_f = \left| d(x)\text{-}d(x-\lambda d(x)) \right|,$$

où $d(x)$ représente le vecteur de mouvement dans la position $x$, et $\lambda$ représente une variable.

5. Procédé selon la revendication 4, dans lequel la variable $\lambda$ peut prendre des valeurs entre 0,5 et 1,0.

6. Procédé selon la revendication 4, **caractérisé en ce que** les métriques $r_f$ et $r_b$ sont comparées avec une valeur de seuil $T_r$, et en fonction de ce résultat de comparaison, une méthode d'interpolation appropriée est sélectionnée et cette sélection est fournie à l'unité d'interpolation compensée par mouvement.

7. Procédé selon la revendication 6, **caractérisé en ce que** la méthode d'interpolation appropriée est sélectionnée de sorte que :

   - Si $r_b < T_r$ et $r_f < T_r$ bidirectionnelle
   - Si $r_b < T_r$ et $r_f >= T_r$ unidirectionnelle arrière
   - Si $r_b >= T_r$ et $r_f < T_r$ unidirectionnelle avant
   - Si $r_b >= T_r$ et $r_f >= T_r$ interpolation de vecteur nul

8. Procédé selon la revendication 1, **caractérisé en ce que**, après la sélection d'une méthode d'interpolation, l'étape d'interpolation compensée pondérée applique les sous-étapes suivantes :

   - la détermination d'un noyau de pondération pour chaque bloc d'un voisinage de 3x3 blocs, en fonction de la méthode d'interpolation sélectionnée,
   - pour chaque bloc, le calcul de l'interpolation pour chaque pixel $I(x,t+0,5)$ en fonction du type d'interpolation déterminé,
   - l'accumulation de l'intensité d'interpolation pondérée dans un tampon d'intensité de sorte que :

$$I_{buf} = I_{buf} + wI(x,t+0,5),$$

   - l'accumulation du coefficient de noyau de pondération correspondant dans un tampon de pondération de sorte que : $W_{buf} = W_{buf} + w$,
   - après la visite de tous les blocs dans l'image, la normalisation du tampon d'intensité avec le tampon de pondération pour chaque pixel, pour obtenir l'image interpolée compensée par mouvement.

9. Procédé selon les revendications 7 et 8, **caractérisé en ce que** le procédé comprend en outre les étapes suivantes :

   - l'accumulation de coefficients de pondération dans un tampon d'occultation de sorte que :

- un coefficient de pondération annulé est ajouté pour chaque interpolation unidirectionnelle avant ;
- un coefficient de pondération est ajouté pour chaque interpolation unidirectionnelle arrière ;
- et aucun coefficient n'est ajouté pour d'autres types d'interpolation ;

- la normalisation du tampon d'occultation avec le tampon de pondération de sorte que la carte lisse résultante ayant des valeurs entre -1 et 1 sera une carte de couverture/non couverture : le côté négatif désigne les régions de couverture et le côté positif désigne les régions de non couverture.

**10.** Procédé selon la revendication 1, **caractérisé en ce que** les poids de contribution du bloc actuel et de ses 8 voisins sont une valeur fixe et/ou fonction de la métrique de correspondance et/ou de la métrique de fiabilité du vecteur actuel pour le bloc considéré.

**11.** Procédé selon la revendication 1, **caractérisé en ce qu'**il comprend en outre les étapes suivantes :

- la mise à zéro d'un tampon d'intensité, d'un tampon de poids et d'un tampon d'occultation pour tous les pixels $I_{buf} = 0$, $W_{buf} = 0$ et $O_{buf} = 0$ ;
- la visite de chaque bloc dans n'importe quel ordre de balayage et le calcul des métriques $r_b$ et $r_f$ pour le contrôle de fiabilité de vecteur de mouvement de sorte que :

$$r_b = \left| d(x)\text{-}d(x+\lambda d(x)) \right|$$

et

$$r_f = \left| d(x)\text{-}d(x\text{-}\lambda d(x)) \right|,$$

où $d(x)$ est le vecteur de mouvement du bloc en x ;
- la détermination du type d'interpolation et de son noyau de pondération pour un voisinage de 3x3 blocs ;
- pour chaque bloc dans le voisinage de 3x3 blocs, le calcul de l'interpolation pour chaque pixel $I(x,t+0,5)$ en fonction du type d'interpolation déterminé ;
- l'accumulation de l'intensité d'interpolation pondérée et du coefficient de noyau de pondération correspondant dans les tampons :

$$I_{buf} = I_{buf} + wI(x,t+0,5)$$

$$W_{buf} = W_{buf} + w$$

$$O_{buf} = O_{buf} \pm w$$

pour des cas d'interpolation unidirectionnelle où w est le coefficient de pondération du bloc correspondant dans le voisinage de 3x3 blocs ;
- après la visite de tous les blocs dans l'image, la normalisation des tampons d'intensité et d'occultation avec le tampon de pondération pour chaque pixel :

$I_{final}(x,t+0,5) = I_{buf}(x)/W_{buf}(x)$ donne la valeur d'intensité de l'image interpolée.
$O_{final}(x,t+0,5) = O_{buf}(x)/W_{buf}(x)$ donne la carte d'occultation.

**Figure 1**

| 2 | 4 | 2 |
|---|---|---|
| 4 | 6 | 4 |
| 2 | 4 | 2 |

**Figure 2**

| 1 | 1 | 1 |
|---|---|---|
| 1 | 1 | 1 |
| 1 | 1 | 1 |

**Figure 3**

**Figure 4**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1855474 A1

**Non-patent literature cited in the description**

- **NOGAKI, S. ; OHTA, M.** *Circuits and Systems, 1992. ISCAS '92. Proceedings,* 1992

- **SUNG-HEE LEE ; OHJAE KWON ; RAE-HONG PARK.** Weighted-adaptive motion-compensated frame rate up-conversion - Consumer Electronics. *IEEE Transactions,* August 2003, vol. 49 (3), 485-492